# EUROPEAN PATENT APPLICATION

(11) **EP 4 800 242 A1**
(43) Date of publication of application: **02.09.2026**
(21) Application number: 24884043.1
(22) Date of filing: 19.07.2024
(51) Int. Cl.: F03D 80/30

(54) **LIGHTNING PROTECTION SYSTEM, WIND TURBINE BLADE, WIND POWER GENERATION DEVICE, AND BLADE TIP LIGHTNING RECEPTOR**

(30) Priority: 31.10.2023 CN 202311435654
(71) Applicant: Sinoma Wind Power Blade Co., Ltd., Beijing 100192 (CN)
(72) Inventor: CUI, Xiaopeng, Beijing 100192 (CN); WANG, Xiangdong, Beijing 100192 (CN); LI, Chengliang, Beijing 100192 (CN); LU, Xiaofeng, Beijing 100192 (CN); LI, Guoyong, Beijing 100192 (CN)
(74) Representative: IPrime Bonnekamp Sparing Patentanwaltsgesellschaft mbH
(86) International application number: PCT/CN2024/106404
(87) International publication number: WO 2025/092035

(57) **Abstract**

A lightning protection system (100) for a wind turbine blade, a wind turbine blade, a wind power generation device, and a blade tip lightning receptor (10), which can improve the current carrying efficiency of conductors and reduce the consumption of conductor materials. The lightning protection system (100) is used for a blade, and the lightning protection system (100) comprises: a blade tip lightning receptor (10) comprising a first conductor portion (11) and a second conductor portion (12) which are distributed in a first direction, wherein the second conductor portion (12) is connected to the first conductor portion (11), the blade tip lightning receptor (10) can be connected to the blade tip of the blade, and at least part of the first conductor portion (11) protrudes from the blade tip; and a first lead (20) having one end electrically connected to the second conductor portion (12) and the other end extending towards a side where the blade root of the blade is located. At least one of the first conductor portion (11) and the first lead (20) is internally hollow, thereby improving the current carrying efficiency of conductor materials in the first conductor portion (11) and/or the first lead (20) in the lightning protection system (100), and reducing the consumption of the conductor materials in the lightning protection system (100).

## Description

### CROSS-REFERENCE TO RELATED APPLICATIONS

The present application claims the priority to Chinese Patent Application No. 202311435654.2, filed on October 31, 2023, and titled "Lightning Protection System, Wind Turbine Blade, Wind Power Generation Device, and Blade Tip Lightning Receptor", which is incorporated herein by reference in its entirety.

### TECHNICAL FIELD

The present application relates to the technical field of lightning protection systems for wind turbine blade, and in particular to a lightning protection system, a wind turbine blade, a wind power generation device, and a blade tip lightning receptor.

### BACKGROUND

The existing blade lightning protection system mainly includes a blade tip lightning receptor assembly, a blade body lightning receptor assembly, and a down-conductor system. The blade tip lightning receptor assembly and one or more blade body lightning receptor assemblies are connected to a grounding point of a blade root through the down-conductor system.

Lightning current belongs to a time-varying current with a high change rate. The existing lightning protection system has insufficient design. When the lightning protection system exhibits severe skin effect when conducting lightning current during operation, the current density in the inner region of the conductor is extremely low, the amount of conducted current is small, and the impedance is high, which results in a high risk of high-temperature fire and poor reliability.

### SUMMARY

The embodiments of the present application provide a lightning protection system for a wind turbine blade, a wind turbine blade, a wind power generation device, and a blade tip lightning receptor. The lightning protection system may ensure the guidance of lightning current, and may effectively reduce the risk of fire when the skin effect occurs, and thus has a high reliability.

In a first aspect, the embodiments of the present application provide a lightning protection system for a blade. The lightning protection system comprises a blade tip lightning receptor which comprises a first conductor portion and a second conductor portion which are distributed in a first direction, wherein the second conductor portion is connected to the first conductor portion, the blade tip lightning receptor being configured to be connected to a blade tip of a blade so that at least a part of the first conductor portion is configured to protrude from the blade tip; and a first lead, an end of the first lead being electrically connected to the second conductor portion and the other end of the first lead extending towards a side where a blade root of the blade is located, wherein at least one of the first conductor portion and the first lead is internally hollow.

According to an embodiment of the first aspect of the application, the first conductor portion comprises a first component and a second component, wherein the second component is connected between the first component and the second conductor portion, the first component is configured to protrude from the blade tip, the first component has a first cavity, and the second component has a second cavity communicating with the first cavity.

According to an embodiment of the first aspect of the application, at least a part of the second conductor portion is inserted into the first lead and electrically connected to the first lead; or the second conductor portion is provided with a third cavity therein, the third cavity communicates with the second cavity, and the end of the first lead at least partially extends into the third cavity and is electrically connected to the second conductor portion.

According to an embodiment of the first aspect of the application, at least one of the first cavity and the second cavity is provided with a first insulator therein; or at least one of the first cavity and the second cavity is provided with a first support body therein, and the first support body is connected to the first conductor portion.

According to an embodiment of the first aspect of the application, the first component, the second component, and the second conductor portion are integrally formed; or wherein a wall thickness of the first component, the second component, and the second conductor portion is 1-3 mm.

According to an embodiment of the first aspect of the application, the first lead is provided with a first via-hole penetrating along an extension direction of the first lead, and a fitting area of the first lead and the second conductor portion is provided with a first support body which is inserted into the first via-hole.

According to an embodiment of the first aspect of the application, the lightning protection system further comprises a first lightning receptor base; the first lightning receptor base is provided with a pair of first connection portions, the first lightning receptor base is connected in series to the first lead through the pair of first connection portions, a connection area between the first connection portion and the first lead is provided with the first support body which is inserted into the first via-hole of the first lead, and the first lightning receptor base is configured to be connected to a first blade body lightning receptor.

According to an embodiment of the first aspect of the application, a plurality of the first lightning receptor bases, which are spaced from each other, are connected in series to a side of the first lead facing the blade tip lightning receptor in an extension direction of the first lead.

According to an embodiment of the first aspect of the application, the lightning protection system further comprises a second lightning receptor base, wherein the second lightning receptor base is provided with a second connection portion, and the second lightning receptor base being configured to be connected to a second blade body lightning receptor; and a second lead, wherein the second lead is provided with a second via-hole penetrating along an extension direction of the second lead, the second connection portion of the second lightning receptor base is electrically connected to the first lead through the second lead, a connection area between the second lead and the second connection portion is provided with the first support body which is inserted into the second via-hole.

According to an embodiment of the first aspect of the application, a plurality of the second lightning receptor bases are provided at one side of the first lead away from the blade tip lightning receptor, and each of the second lightning receptor bases is electrically connected to the first lead through one of the second leads.

According to an embodiment of the first aspect of the application, a wall thickness of the first lead and the second lead is 1-3 mm.

In a second aspect, the embodiments of the present application further provide a wind turbine blade comprising a lightning protection system according to any embodiment of the first aspect of the present application.

In a third aspect, the embodiments of the present application further provide a wind power generation device, comprising the wind turbine blade according to any embodiment of the second aspect of the present application.

In a fourth aspect, the embodiments of the present application further provide a blade tip lightning receptor which comprises a first conductor portion and a second conductor portion; the first conductor portion comprises a first component and a second component; the second component is connected between the first component and the second conductor portion; the first component is configured to protrude from the blade tip; cross-sectional areas of the first component, the second component, and the second conductor portion exhibit a decreasing tendency in a first direction from the second component pointing to the first component; and at least one of the first component and the second component has a cavity therein.

The lightning protection system according to the embodiments of the present application is used for the blade. The lightning protection system includes the blade tip lightning receptor and the first lead. The blade tip lightning receptor is connected to the blade tip of the blade. A first conductor portion of the blade tip lightning receptor is electrically connected to an end of the first lead through the second conductor portion, and the other end of the first lead extends toward the side where the blade root of the blade is located, such that lightning current received by the blade tip lightning receptor is conducted from the first conductor portion through the second conductor portion to the first lead, and then conducted through the first lead to a grounding point on the side where the blade root of the blade is located. Since at least one of the first conductor portion and the first lead is internally hollow, when the lightning current received by the blade tip lightning receptor is conducted from the first conductor portion to the first lead, the current is conducted only in other parts of the first conductor portion and/or the first lead except the hollow part. This avoids the issue where the lightning current cannot penetrate deep into the conductor due to the skin effect during the conduction process of the lightning current in the conductor, which would result in low current-carrying efficiency of the blade tip lightning receptor and the first lead. Based on the above, the current-carrying efficiency of the conductor materials in the second conductor portion and/or the first lead in the lightning protection system can be improved. In addition, the hollow design may reduce the impedance during the lightning current conduction process, prevent the conductor materials from releasing a large amount of heat due to high impedance, causing damage to the lightning protection system, and causing the risk of fire, improve the operational reliability of the lightning protection system, and reduce the consumption of conductor materials in the second conductor portion and/or the first lead and the cost at the same time.

### BRIEF DESCRIPTION OF THE DRAWINGS

Features, advantages, and technical effects of exemplary embodiments of the present application will be described below with reference to the accompanying drawings.
Fig. 1 shows a schematic structural view of a lightning protection system according to an embodiment of the present application; and
Fig. 2 shows a schematic cross-sectional view of a lightning protection system according to an embodiment of the present application.

### Reference signs:

100-lightning protection system;
10-blade tip lightning receptor; 11- first conductor portion; 11a- first component; Q1- first cavity; 11b- second component; Q2- second cavity; 12- second conductor portion; Q3- third cavity;
20- first lead; H1- first via-hole; Z1- first support body;
30- first lightning receptor base; 31- first connection portion;
40- second lightning receptor base; 41- second connection portion;
50- second lead; and
X- first direction.

### DETAILED DESCRIPTION

Features and exemplary embodiments of various aspects of the present application will be described in detail below. In the following detailed description, numerous specific details are set forth in order to provide a thorough understanding of the present application. However, it will be apparent for those skilled in the art that, the present application may be implemented without some of these specific details. The following description of the embodiments is merely intended to provide a better understanding of the present application by illustrating examples of the present application. In the drawings and the following description, at least some well-known structures and techniques are not shown in order to avoid unnecessarily obscuring the application. In addition, the dimensions of some structures may be enlarged for clarity. Furthermore, the described features, structures, or characteristics may be combined in any suitable manner in one or more embodiments.

The directional words appearing in the following description are the directions shown in the figures, and do not limit the specific structure of the molding device and molding method of the present application. In the description of this application, it should also be noted that, unless otherwise clearly specified and limited, "multiple" means two or more, and the terms "installation" and "connection" should be understood in a broad sense. For example, it may be fixed connection, detachable connection, or integral connection; it may be directly connected or indirectly connected; the orientation or positional relationship indicated by the terms "upper", "lower", "left", "right", "inner", "outer", and so on is only used for facilitating the description of the present application and simplify the description, and does not indicate or imply that the device or element referred to must have a specific orientation, be constructed and operated in a specific orientation, and therefore cannot be understood as a limitation of the present application. For those of ordinary skill in the art, the specific meanings of the above terms in this application may be understood depending on specific circumstances.

In addition, the terms "first", "second", and so on are used for descriptive purposes only and are not to be construed as indicating or implying relative importance. For those of ordinary skill in the art, the specific meanings of the above terms in this application may be understood depending on specific circumstances.

The existing blade lightning protection system mainly includes a blade tip lightning receptor assembly, a blade body lightning receptor assembly, and a down-conductor system. The blade tip lightning receptor assembly and one or more blade body lightning receptor assemblies are connected to a grounding point of a blade root through the down-conductor system.

Lightning current belongs to a time-varying current with a high change rate. The existing lightning protection system has insufficient design. When the lightning protection system exhibits severe skin effect when conducting lightning current during operation, the current density in the inner region of the conductor is extremely low, the amount of conducted current is small, and the impedance is high, which results in a high risk of high-temperature fire and poor reliability.

In order to solve the above problems, the embodiments of the present application provide a lightning protection system for a wind turbine blade, a wind turbine blade, a wind power generation device, and a blade tip lightning receptor. The lightning protection system may ensure the guidance of lightning current, and may effectively reduce the risk of fire when the skin effect occurs, and thus has a high reliability.

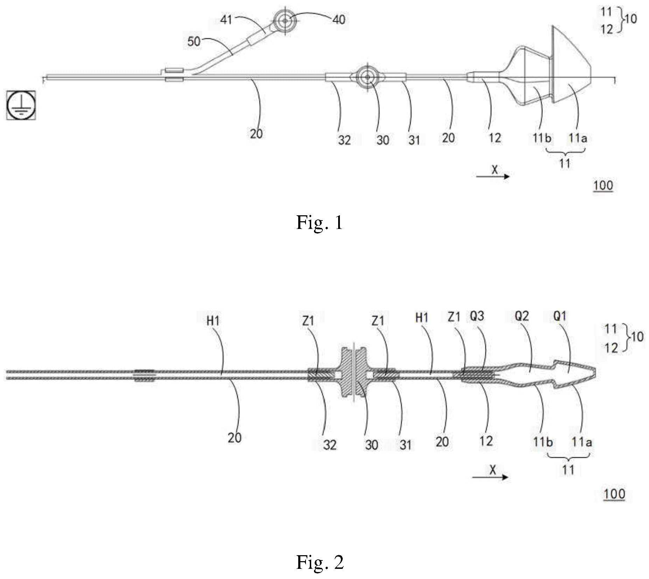

Fig. 1 shows a schematic structural view of a lightning protection system according to an embodiment of the present application; and Fig. 2 shows a schematic cross-sectional view of a lightning protection system according to an embodiment of the present application.

As shown in Figs. 1 and 2, the embodiments of the present application provide a lightning protection system 100 used for a blade. The lightning protection system 100 includes a blade tip lightning receptor 10 and a first lead 20. The blade tip lightning receptor 10 includes a first conductor portion 11 and a second conductor portion 12 which are distributed in a first direction X, the second conductor portion 12 being connected to the first conductor portion 11. The blade tip lightning receptor 10 is connected to a blade tip of a blade and at least part of the first conductor portion 11 protrudes from the blade tip. An end of the first lead 20 is electrically connected to the second conductor portion 12 and the other end thereof extends towards a side where a blade root of the blade is located. At least one of the first conductor portion 11 and the first lead 20 is internally hollow.

The lightning protection system 100 according to the embodiments of the present application is used for the blade. The lightning protection system 100 includes the blade tip lightning receptor 10 and the first lead 20. The blade tip lightning receptor 10 is connected to the blade tip of the blade. A first conductor portion 11 of the blade tip lightning receptor 10 is electrically connected to an end of the first lead 20 through the second conductor portion 12, and the other end of the first lead 20 extends toward the side where the blade root of the blade is located, such that lightning current received by the blade tip lightning receptor 10 is conducted from the first conductor portion 11 through the second conductor portion 12 to the first lead 20, and then conducted through the first lead 20 to a grounding point on the side where the blade root of the blade is located. Since at least one of the first conductor portion 11 and the first lead 20 is internally hollow, when the lightning current received by the blade tip lightning receptor 10 is conducted from the first conductor portion 11 to the first lead 20, the current is conducted only in other parts of the first conductor portion 11 and/or the first lead 20 except the hollow part. This avoids the issue where the lightning current cannot penetrate deep into the conductor due to the skin effect during the conduction process of the lightning current in the conductor, which would result in low current-carrying efficiency of the blade tip lightning receptor 10 and the first lead 20. Based on the above, the current-carrying efficiency of the conductor materials in the second conductor portion 12 and/or the first lead 20 in the lightning protection system 100 can be improved. In addition, the hollow design may reduce the impedance during the lightning current conduction process, prevent the conductor materials from releasing a large amount of heat due to high impedance, causing damage to the lightning protection system 100, and causing the risk of fire, improve the operational reliability of the lightning protection system 100, and reduce the consumption of conductor materials in the second conductor portion 12 and/or the first lead 20 and the cost at the same time.

As shown in Figs. 1 and 2, in some optional embodiments, the first conductor portion 11 includes a first component 11a and a second component 11b connected between the first component 11a and the second conductor portion 12. The first component 11a protrudes from the blade tip. The first component 11a has a first cavity Q1, and the second component 11b has a second cavity Q2 communicating with the first cavity Q1.

In the lightning protection system 100 according to the embodiments of the present application, the first component 11a of the first conductor portion 11 has the first cavity Q1, and the second conductor portion 12 of the first conductor portion 11 has the second cavity Q2 communicating with the first cavity Q1, such that when the lightning current is conducted through the first component 11a and the second component 11b of the first conductor portion 11, the problem of low current-carrying efficiency caused by the skin effect can be avoided. Meanwhile, the consumption of the conductor materials in the first component 11a and the second component 11b can be reduced, and thus the cost can be reduced. In addition, the weight of the blade tip lightning receptor 10 can be reduced, and the bearing load of the blade can be reduced.

Optionally, any one of the first conductor portion 11 and the second conductor portion 12 has a cavity, whereby the consumption of conductor materials can be reduced, the current-carrying efficiency can be improved, and the bearing load of the blade can be reduced.

As shown in Figs. 1 and 2, in some optional embodiments, the cross-sectional areas of the first component 11a, the second component 11b, and the second conductor portion 12 exhibit a decreasing trend in a first direction X from the second component 11b pointing to the first component 11a.

In the lightning protection system 100 according to the embodiments of the present application, since the first component 11a protrudes from the blade tip, in order to enable the first component 11a to be better fitted and connect to the blade tip and considering the influence of factors such as wind force on the first component 11a, the cross-sectional area of the first component 11a exhibits a decreasing tendency in the first direction X from the second component 11b pointing to the first component 11a, which improves the fit between the first component 11a and the blade, reduces the wind resistance of the first component 11a, and improves the installation stability and reliability of the first component 11a.

The second component 11b is provided inside the blade tip. In order to accommodate the structural feature where the cross-sectional area of the blade exhibits a decreasing tendency in the direction from the blade root to the blade tip, the cross-sectional area of the first component 11a exhibits a decreasing tendency in the first direction X and from the second component 11b pointing to the first component 11a , such that the second component 11b has more contact area with the fitting area of the blade tip, thereby enhancing the stability of the fit between the second component 11b and the blade tip. Since the first component 11a is connected to the second conductor portion 12 through the second component 11b, the fitting stability between the second component 11b and the blade tip is improved, the mounting stability of the first component 11a on the blade tip is improved, and thus the structural stability of the lightning protection system 100 and the mounting stability of the lightning protection system 100 on the blade are improved.

As shown in Figs. 1 and 2, in some optional embodiments, at least part of the second conductor portion 12 is inserted into and electrically connected to the first lead 20. Alternatively, the second conductor portion 12 is provided with a third cavity Q3 therein communicating with the second cavity Q2, and an end of the first lead 20 at least partially extends into the third cavity Q3 and is electrically connected to the second conductor portion 12.

In the lightning protection system 100 according to the embodiments of the present application, the second conductor portion 12 may be solid or hollow, and at least a part of the second conductor portion 12 may be inserted into and electrically connected to the first lead 20. Alternatively, the second conductor portion 12 is provided with the third cavity Q3 communicating with the second cavity Q2 in the second component 11b of the first conductor portion 11. In this manner, the first cavity Q1 in the first component 11a, the second cavity Q2 in the second component 11b, and the third cavity Q3 in the second conductor portion 12 communicate with each other in sequence, which further improves the current-carrying efficiency of the blade tip lightning receptor 10 when conducting the lightning current and further reduces the consumption of conductor materials in the blade tip lightning receptor 10. Meanwhile, at least a part of the first lead 20 extends into the third cavity Q3 in the second conductor portion 12 for connection, such that the connection between the first lead 20 and the second conductor portion 12 becomes simpler and more convenient, facilitating installation and detachment.

As shown in Figs. 1 and 2, in some optional embodiments, at least one of the first cavity Q1 and the second cavity Q2 is provided with a first insulator therein; or at least one of the first cavity Q1 and the second cavity Q2 is provided with a first support body therein, and the first support body is connected to the first conductor portion 11.

In the lightning protection system 100 according to the embodiments of the present application, to ensure the mechanical strength of the blade tip lightning receptor 10, at least one of the first cavity Q1 in the first component 11a and the second cavity Q2 in the second component 11b is provided with the first insulator therein, or at least one of the first cavity Q1 in the first component 11a and the second cavity Q2 in the second component 11b is provided with the first support body therein to support the hollow structure of the first conductor portion 11, enhance the strength of the first conductor portion 11, prevent deformation of the first cavity Q1 or the second cavity Q2 from affecting the conduction of lightning current, and avoiding reducing the current-carrying efficiency of the first conductor portion 11.

It may be understood that the first support body may be a plurality of metal reinforcing ribs which are provided in at least one of the first cavity Q1 and the second cavity Q2 to play a role in supporting the first cavity Q1 and/or the second cavity Q2, thereby preventing the first cavity Q1 and/or the second cavity Q2 from collapsing, and thus enhancing the mechanical strength of the first conductor portion 11.

As shown in Figs. 1 and 2, in some optional embodiments, the first component 11a, the second component 11b, and the second conductor portion 12 are integrally formed, and/or the wall thickness of the first component 11a, the second component 11b, and the second conductor portion 12 is 1-3 mm.

In the lightning protection system 100 according to the embodiments of the present application, the first component 11a, the second component 11b, and the second component 11b are integrally formed, which facilitates the control of the wall thickness of each part of the blade tip lightning receptor 10 and the manufacture of the blade tip lightning receptor 10. In addition, the assembly steps of the blade tip lightning receptor 10 can be reduced, and the lightning current can be conducted more efficiently in the conductors of the blade tip lightning receptor 10.

The current-carrying efficiency of the lightning current is higher when the thickness of the conductor material surface is 1-3 mm due to the skin effect when the lightning current is conducted through a conductor. Therefore, the wall thickness of the first component 11a, the second component 11b, and the second conductor portion 12 is set to 1-3 mm to improve the current-carrying efficiency of the blade tip lightning receptor 10 during the conduction of the lightning current.

As shown in Figs. 1 and 2, in some optional embodiments, the first lead 20 is provided with a first via-hole H1 penetrating along an extension direction of the first lead 20. The fitting area of the first lead 20 and the second conductor portion 12 is provided with a first support body Z1, which is inserted into the first via-hole H1.

In the lightning protection system 100 according to the embodiments of the present application, when the first conductor portion 11 of the blade tip lightning receptor 10 receives a lightning current and conducts the lightning current to the first lead 20 through the second conductor portion 12, the lightning current is conducted to the grounding point provided at the blade root through the first lead 20. Since the skin effect also exists when the lightning current is conducted in a solid lead, if the thickness of the conductor of the lead exceeds a skin depth, the current density in the central part of the lead conductor is low during the conduction of the lightning current, and the conducted current amount is small, which leads to the resistance of the lead in this case being higher than that when it conducts a constant current. Therefore, the first lead 20 is provided with the first via-hole H1 penetrating along the extension direction of the first lead 20, and the conductor of the first lead 20 spatially surrounds the first via-hole H1, such that the lightning current is conducted through the conductor around the first via-hole H1. The part of the first lead 20 that does not play a role is removed, thereby reducing the waste of conductor material, improving the current-carrying efficiency of the first lead 20, preventing the first lead 20 from releasing a large amount of heat during the conduction process of the lightning current in the first lead 20 due to high impedance, thereby avoiding functional damage to the lightning protection system 100, and reducing the possibility of fire.

The fitting area of the first lead 20 and the second conductor portion 12 is provided with the first support body Z1 which is inserted into the first via-hole H1 of the first lead 20 to support the first via-hole H1 and prevent the first via-hole H1 of the first lead 20 from being flattened due to an external pressure.

As shown in Figs. 1 and 2, in some optional embodiments, the lightning protection system 100 further includes a first lightning receptor base 30, which is provided with a pair of first connection portions 31and is connected in series to the first lead 20 through the pair of first connection portions 31. The connection area between the first connection portion 31 and the first lead 20 is provided with the first support body Z1 inserted into the first via-hole H1 of the first lead 20. The first lightning receptor base 30 is connected to a first blade body lightning receptor.

In the lightning protection system 100 according to the embodiments of the present application, the first lightning receptor base 30 of the lightning protection system 100 is connected in series to the first lead 20 through the pair of first connection portions 31, and the number of receiving points of the first blade body lightning receptor connected to the first lightning receptor base from which the lightning protection system 100 receives the lightning current is increased, thereby improving the operational efficiency and stability of the lightning protection system 100.

Since the connection area between the first connection portion 31 and the first lead 20 is provided with the first support body Z1 which is inserted into the first via-hole H1 of the first lead 20, in the connection area between the first connection portion 31 and the first lead 20, the first via-hole H1 of the first lead 20 will not collapse caused by connection of the first connection portion 31 and the first lead 20. When the lightning current received by the blade tip lightning receptor 10 is conducted through the first conductor portion 11 and the second conductor portion 12 to the first lead 20, the lightning current is then conducted by the first lead 20 through the first lightning receptor base to the grounding point arranged at the blade root, and finally conducted to the ground. When the lightning current is received by the first blade body lightning receptor connected to the first lightning receptor base 30, the lightning current is conducted to the first lead 20 through the first lightning receptor base 30 connected in series to the first lead 20, then conducted through the first lead 20 to the grounding point arranged at the blade root, and finally conducted to the ground.

In some optional embodiments, there are a plurality of first lightning receptor bases 30 which are arranged in series with each other. Each of the first lightning receptor bases 10 is installed with a first lightning receptor, which is configured to receive lightning current, such that the number of receiving points from which the blade may receive lightning current is increased, and the operational efficiency of the lightning protection system 100 can be improved.

As shown in Figs. 1 and 2, in some optional embodiments, a side of the first lead 20 facing the blade tip lightning receptor 10 is connected in series to a plurality of first lightning receptor bases 30, which are spaced from each other, in the extension direction of the first lead 20.

In the lightning protection system 100 according to the embodiments of the present application, the probability that the blade tip of the blade receives the lightning current is higher than the probability that the blade root of the blade receives the lightning current. Therefore, a side of the first lead 20 facing the blade tip lightning receptor 10 is connected in series to the plurality of first lightning receptor bases 30, which are spaced from each other, in the extension direction of the first lead 20. Each of the first lightning receptor bases 30 is connected to one of the first blade body lightning receptors, such that a plurality of lightning current receiving points are added at the blade tip of the blade. When the lightning current is received by the blade tip lightning receptor 10 or any one of the first blade body lightning receptors, it may be conducted through the first lead 20 to the grounding point arranged at the blade root and finally conducted to the ground, improving the operational efficiency and stability of the lightning protection system 100.

As shown in Figs. 1 and 2, in some optional embodiments, the lightning protection system 100 further includes a second lightning receptor base 40, which is provided with a second connection portion 41 and connected to a second blade body lightning receptor; and a second lead 50 provided with a second via-hole penetrating along the extension direction of the second lead 50. The second connection portion 41 of the second lightning receptor base 40 is electrically connected to the first lead 20 through the second lead 50, and the connection area between the second lead 50 and the second connection portion 41 is provided with the first support body Z1 which is inserted into the second via-hole.

In the lightning protection system 100 according to the embodiments of the present application, the second lightning receptor base 40 is electrically connected to the second lead 50 through the second connection portion 41, and then connected to the first lead 20 through the second lead 50. When the lightning current is received by the second blade body lightning receptor connected to the second lightning receptor base 40, the lightning current is conducted by the second blade body lightning receptor through the second connection portion 41 of the second lightning receptor base 40 to the second lead 50, then conducted through the second lead 50 to the first lead 20, then conducted through the first lead 20 to the grounding point arranged at the blade root, and finally conducted to the ground. The second connection lead may allow the second lightning receptor base 40 to be disposed away from the first lead 20, whereby the number of receiving points for receiving lightning current in an area of the blade away from the first lead 20 is increased, and the operational efficiency and stability of the lightning protection system 100 can be further improved.

The second lead 50 is provided with a second via-hole penetrating along the extension direction thereof. The part of the second lead 50 that does not play a role is removed, thereby reducing the waste of conductor material, improving the current-carrying efficiency of the second lead 50, avoiding low current-carrying efficiency caused by the skin effect during the conduction process of the lightning current in the second lead 50, preventing the first lead 20 from releasing a large amount of heat during the conduction process of the lightning current in the first lead 20 due to high impedance, avoiding functional damage to the lightning protection system 100, and reducing the possibility of fire.

As shown in Figs. 1 and 2, in some optional embodiments, a plurality of second lightning receptor bases 40 are provided at one side of the first lead 20 away from the blade tip lightning receptor 10, and each of the second lightning receptor bases 40 is electrically connected to the first lead 20 through one second lead 50.

In the lightning protection system 100 according to the embodiments of the present application, since the blade gradually widens in the direction from the blade tip to the blade root, the plurality of second lightning receptor bases 40 are provided at a side of the first lead 20 away from the blade tip lightning receptor 10, each of the second lightning receptor bases 40 is electrically connected to the first lead 20 through one second lead 50, and each of the second lightning receptor bases 40 is connected to one second blade body lightning receptor. In this manner, a plurality of lightning current receiving points are added to the blade close to the blade root position. When the lightning current is received by any one of the second blade body lightning receptors, the lightning current is conducted through the second lightning receptor base 40 to the second lead 50, and conducted through the second lead 50 to the first lead 20, and finally conducted to the grounding point of the blade root and to the ground.

It may be understood that the plurality of second lightning receptor bases 40 may be disposed on a side of the first lead 20 in the extension direction of the first lead 20, or may be disposed on two sides of the first lead 20 in the extension direction of the first lead 20, which is not limited herein.

As shown in Figs. 1 and 2, in some optional embodiments, the wall thickness of the first lead 20 and the second lead 50 is 1-3 mm.

In the lightning protection system 100 according to the embodiments of the present application, since the resistivity and permeability of each conductor are different, and the frequency spectrum of the lightning signal is also different, the skin depth of the lightning current when conducted through different conductor materials is different, for example, 1.0-1.5 mm for red copper, 1.0-2.0 mm for aluminum alloy, and 2.0-3.0 mm for austenitic stainless steel. Therefore, when the cross-sectional area of the conductor material is set below 70 mm² and the surface thickness is 1-3 mm, a higher current-carrying efficiency may be ensured. Thus, the wall thickness of the first lead 20 and the second lead 50 is set to 1-3 mm to improve the current-carrying efficiency and mechanical performance of the first lead 20 and the second lead 50 in the conduction process of the lightning current.

It should be noted that, the wall thickness of the first lead 20 and the second lead 50 refers to the wall thickness of the conductor materials of the first lead 20 and the second lead 50.

The embodiments of the present application further provide a wind turbine blade, which includes the lightning protection system 100 according to any embodiment of the first aspect of the present application.

The wind turbine blade according to the embodiments of the present application has all the beneficial effects of the lightning protection system 100 according to each of the above embodiments of the present application. For details, reference may be made to the specific description of the lightning protection system 100 in each of the above embodiments, which will not be repeated here.

The embodiments of the present application further provide a wind power generation device, which includes the wind turbine blade according to any embodiment of the second aspect of the present application.

The wind power generation device according to the embodiments of the present application has all the beneficial effects of the wind turbine blade according to each of the above embodiments of the present application. For details, reference may be made to the specific description of the wind turbine blade in each of the above embodiments, which will not be repeated here.

As shown in Figs. 1 and 2, the embodiments of the present application further provide a blade tip lightning receptor 10, which includes a first conductor portion 11 and a second conductor portion 12. The first conductor portion 11 includes a first component 11a and a second component 11b connected between the first component 11a and the second conductor portion 12, and the first component 11a protrudes from the blade tip. The cross-sectional areas of the first component 11a, the second component 11b, and the second conductor portion 12 exhibit a decreasing tendency in a first direction X from the second component 11b pointing to the first component 11a. At least one of the first component 11a and the second component 11b has a cavity therein.

In the blade tip lightning receptor 10 according to the embodiments of the present application, the first component 11a of the first conductor portion 11 protrudes from the blade tip, such that the first conductor portion 11 may receive the lightning current. The lightning current, after being received by the first component 11a, is conducted by the first component 11a to the second conductor portion 12 through the second component 11b, and then conducted through the second conductor portion 12 via the lead to a grounding point, and finally conducted to the ground. Since at least one of the second component 11b and the first component 11a has a cavity therein, the problem of low current-carrying efficiency caused by the skin effect can be avoided in the first conductor portion 11. In addition, the hollow design may reduce the impedance during the conduction process of the lightning current, prevent the conductor materials from releasing a large amount of heat due to high impedance, causing damage to the blade tip lightning receptor 10 and causing the risk of fire, improve the operational reliability of the blade tip lightning receptor 10, reduce the consumption of conductor materials, and reduce the cost. Moreover, the weight of the blade tip lightning receptor 10 can be reduced, and the bearing load of the blade can be reduced.

Since the first component 11a protrudes from the blade tip, in order to enable the first component 11a to better fit and connect to the blade tip and considering the influence of factors such as wind force on the first component 11a, the cross-sectional area of the first component 11a exhibits a decreasing tendency in the first direction X from the second component 11b pointing to the first component 11a, which improves the fit between the first component 11a and the blade, reduces a wind resistance of the first component 11a, and improves an installation stability and reliability of the first component 11a.

The second component 11b is provided inside the blade tip. In order to accommodate a structural feature where the cross-sectional area of the blade exhibits a decreasing tendency in the direction from the blade root to the blade tip, the cross-sectional area of the second component 11b exhibits a decreasing tendency in the direction from the second component 11b pointing to the first component 11a, such that has more contact area with the fitting area of the blade tip, thereby enhancing the stability of the fit between the second component 11b and the blade tip. Since the first component 11a is connected to the second conductor portion 12 through the second component 11b, the fitting stability between the second component 11b and the blade tip is improved, the mounting stability of the first component 11a on the blade tip is improved, and thus the structural stability of the lightning protection system 100 and the mounting stability of the lightning protection system 100 on the blade are improved.

While the present application has been described with reference to the preferred embodiments, various modifications may be made thereto and equivalents may be substituted for parts thereof without departing from the scope of the present application. In particular, as long as there is no structural conflict, the technical features mentioned in each embodiment can be combined in any manner. The present application is not limited to the particular embodiments disclosed herein, but includes all technical solutions falling within the scope of the claims.

## Claims

1. A lightning protection system used for a blade, the lightning protection system comprising:
a blade tip lightning receptor, comprising a first conductor portion and a second conductor portion which are distributed in a first direction, the second conductor portion being connected to the first conductor portion, the blade tip lightning receptor being configured to be connected to a blade tip of a blade, so that at least a part of the first conductor portion is configured to protrude from the blade tip; and
a first lead, an end of the first lead being electrically connected to the second conductor portion and the other end of the first lead extending towards a side where a blade root of the blade is located,
wherein at least one of the first conductor portion and the first lead is internally hollow.

2. The lightning protection system according to claim 1, wherein the first conductor portion comprises a first component and a second component connected between the first component and the second conductor portion, the first component is configured to protrude from the blade tip, the first component has a first cavity, and the second component has a second cavity communicating with the first cavity.

3. The lightning protection system according to claim 2, wherein at least a part of the second conductor portion is inserted into the first lead and electrically connected to the first lead; or
wherein the second conductor portion is provided with a third cavity therein communicating with the second cavity, and the end of the first lead at least partially extends into the third cavity and is electrically connected to the second conductor portion.

4. The lightning protection system according to claim 2, wherein at least one of the first cavity and the second cavity is provided with a first insulator therein; or
wherein at least one of the first cavity and the second cavity is provided with a first support body therein, and the first support body is connected to the first conductor portion.

5. The lightning protection system according to claim 2, wherein the first component, the second component, and the second conductor portion are integrally formed; or
wherein a wall thickness of the first component, the second component, and the second conductor portion is 1-3 mm.

6. The lightning protection system according to claim 1, wherein the first lead is provided with a first via-hole penetrating along an extension direction of the first lead, and a fitting area of the first lead and the second conductor portion is provided with a first support body which is inserted into the first via-hole.

7. The lightning protection system according to claim 6, further comprising: a first lightning receptor base,
wherein the first lightning receptor base is provided with a pair of first connection portions, the first lightning receptor base is connected in series to the first lead through the pair of first connection portions, a connection area between the first connection portion and the first lead is provided with the first support body which is inserted into the first via-hole of the first lead, and the first lightning receptor base is configured to be connected to a first blade body lightning receptor.

8. The lightning protection system according to claim 7, comprising a plurality of the first lightning receptor bases which are arranged in series with each other.

9. The lightning protection system according to any one of claims 6 to 8, further comprising:
a second lightning receptor base provided with a second connection portion, the second lightning receptor base being configured to be connected to a second blade body lightning receptor; and
a second lead provided with a second via-hole penetrating along an extension direction of the second lead, the second connection portion of the second lightning receptor base being electrically connected to the first lead through the second lead, and a connection area between the second lead and the second connection portion being provided with the first support body which is inserted into the second via-hole.

10. The lightning protection system according to claim 9, wherein a plurality of the second lightning receptor bases are provided at one side of the first lead away from the blade tip lightning receptor, and each of the second lightning receptor bases is electrically connected to the first lead through one of the second leads.

11. The lightning protection system according to claim 10, wherein a wall thickness of the first lead and the second lead is 1-3 mm.

12. A wind turbine blade comprising the lightning protection system according to any one of claims 1 to 11.

13. A wind power generation device, comprising the wind turbine blade according to claim 12.

14. A blade tip lightning receptor, comprising a first conductor portion and a second conductor portion,
wherein the first conductor portion comprises a first component and a second component connected between the first component and the second conductor portion, the first component is configured to protrude from the blade tip, cross-sectional areas of the first component, the second component, and the second conductor portion exhibit a decreasing tendency in a first direction from the second component pointing to the first component, and at least one of the first component and the second component has a cavity therein.
